# EUROPÄISCHE PATENTSCHRIFT

(11) **EP 4 209 403 B1**
(45) Veröffentlichungstag und Bekanntmachung des Hinweises auf die Patenterteilung: **06.03.2024**
(21) Anmeldenummer: 22150511.8
(22) Anmeldetag: 07.01.2022
(51) Int. Cl.: B62D 1/00, B62D 12/00, B62D 15/02, B62D 47/02, B62D 53/00, G01D 18/00, G01M 17/00

(54) **KALIBRIERVORRICHTUNG ZUM KALIBRIEREN ZUMINDEST EINES KNICKWINKELSENSORS ODER EINES LENKWINKELSENSORS**
CALIBRATION DEVICE FOR CALIBRATING AT LEAST ONE BENDING ANGLE SENSOR OR A STEERING ANGLE SENSOR
DISPOSITIF D'ÉTALONNAGE PERMETTANT D'ÉTALONNER AU MOINS UN CAPTEUR D'ANGLE DE PIVOTEMENT OU UN CAPTEUR D'ANGLE DE BRAQUAGE

(43) Veröffentlichungstag der Anmeldung: 12.07.2023
(73) Patentinhaber: Hübner GmbH & Co. KG, 34123 Kassel (DE)
(72) Erfinder: Eckert, Michael, 34132 Kassel (DE); Gleitsmann, Eric, 01259 Dresden (DE); Wagner, Sebastian, 01445 Radebeul (DE); Nitzsche, Gunter, 01445 Radebeul (DE)

(56) Entgegenhaltungen:
- EP-A1- 3 608 205
- DE-A1-102014 102 302
- DE-A1-102017 203 426
- DE-A1-102017 209 980
- DE-A1-102019 109 191

## Beschreibung

Die vorliegende Erfindung betrifft eine Kalibriervorrichtung sowie ein Verfahren zum Kalibrieren zumindest eines Knickwinkelsensors oder eines Lenkwinkelsensors eines mehrteiligen Straßenfahrzeugs.

Zudem betrifft die vorliegende Erfindung ein System mit einer solchen Kalibriervorrichtung und einem mehrteiligen Straßenfahrzeug.

Aus dem Stand der Technik sind mehrteilige Straßenfahrzeuge in Form von Gelenkbussen, insbesondere Schubgelenkbussen, bekannt, bei denen ein zwei- oder dreiachsiger Vorderwagen über ein Gelenk mit Faltenbalg mit einem Hinterwagen verbunden ist. Motor und Antrieb können sich dabei sowohl im Vorder- als auch im Hinterwagen befinden.

Zur Vermeidung von kritischen Fahrsituationen, in denen entweder eine Beschädigung des Chassis droht oder aber die Fahrstabilität des Fahrzeugs reduziert wird, weisen mehrteilige Straßenfahrzeuge in der Regel einen Knickwinkelsensor für jedes Gelenk zwischen den Wagen auf. Der Knickwinkelsensor misst den zwischen den Längsachsen zweier gekoppelter Wagen während der Fahrt eingeschlossenen Winkel. Das Messsignal des Knickwinkelsensors wird für einen aktiven Eingriff in die Steuerung des Fahrzeugs genutzt. Der Knickwinkel kann zum einen die Knickwinkeldämpfung des Gelenks beeinflussen, aber auch der Anpassung der Motorleistung oder einem aktiven Bremsen des Fahrzeugs dienen.

Das Kalibrieren des Knickwinkelsensors nach der Systemintegration, d.h. nach dem Verbinden der Wagen des Fahrzeugs mit dem Gelenk, wird im Stand der Technik auf einem großräumigen, verkehrs- und hindernisfreien Inbetriebnahmegelände durchgeführt. Das Fahrzeug fährt in Schrittgeschwindigkeit geradeaus. Eine Person läuft hinter dem Fahrzeug her und peilt entlang einer Fahrzeugseite, um abzuschätzen, welcher Wagen in welche Richtung gelenkt werden muss, damit alle Fahrzeugsegmente exakt in Längsrichtung hintereinander positioniert sind. Ist dies geschehen, so stoppt das Fahrzeug mit dem zu kalibrierenden Knickwinkelsensor, das momentane Messsignal des Knickwinkelsensors wird ausgelesen und als Nullposition in der Gelenk- oder Fahrzeugsteuerung markiert.

Darüber hinaus werden in mehrteiligen Straßenfahrzeugen die Lenkwinkel der gelenkten Achsen mit sogenannten Lenkwinkelsensoren erfasst. Auch solche Lenkwinkelsensoren müssen nach der Fertigstellung des Fahrzeugs kalibriert werden. Hierzu wird jedes lenkbare Rad auf einen Drehteller gefahren, an dem ein Einschlagwinkel des Rades bezogen auf die Geradeausrichtung des Fahrzeugs bzw. des jeweiligen Wagens, an dem das Rad angeordnet ist, abgelesen werden kann. Die Räder werden manuell in ihre mechanischen Lenkanschläge gelenkt und die zugehörigen Schwenkwinkel der Drehteller ausgelesen. Diese Schwenkwinkel werden dann den momentanen Messsignalen der Lenkwinkelsensoren zugeordnet und in der Fahrzeugsteuerung abgelegt. Für das Festlegen eines Messsignals eines Lenkwinkelsensors für die Geradeausstellung des jeweiligen Rades wird an die Felgen des Fahrzeugs ein konventionelles Achsmesssystem (Laser-Winkelmesser) montiert und die Räder werden so eingestellt, dass das Achsmesssystem die Parallelität zur Längsachse des Fahrzeugs bestätigt. Die zugehörigen Messsignale der Lenkwinkelsensoren werden ausgelesen und als Geradeausstellung in der Fahrzeugsteuerung abgelegt. Alternativ wird im Stand der Technik die Geradeausstellung der Räder auch während einer Langsamfahrt ermittelt. Hierbei werden die Achsen manuell oder automatisch so gelenkt, dass die beim Kalibrieren der Knickwinkelsensoren ermittelte Geradeausstellung der gekoppelten Wagen eingenommen und beibehalten wird.

DE102014102302 A1 beschreibt ein Verfahren zur Kalibrierung eines gezogenen oder selbstfahrenden Nutzfahrzeugs mit mindestens einer lenkbaren Achse oder eines Gespanns aus einem selbstfahrenden Zugfahrzeug und einem gezogenen mit mindestens einer lenkbaren Achse. Die Positionen der Endanschläge der Geradeausfahrt werden kalibriert, wobei im Stillstand des Nutzfahrzeugs die Endanschläge der lenkbaren Achse des Nutzfahrzeugs automatisch angefahren und die Positionen dieser Endanschläge zur Kalibrierung automatisch ermittelt werden. Aus den Positionen der Endanschläge wird eine vorläufige Position für die Geradeausfahrt der jeweiligen lenkbaren Achse durch Mittelwertbildung automatisch ermittelt. Eine endgültige Position für die Geradeausfahrt der Achse wird automatisch ermittelt, weil sie derart freigegeben ist, dass sie während der Geradeausfahrt passiv einspurt.

DE102017203426 A1 betrifft einen Kalibrierboden zur Kalibrierung von Fahrerassistenzsystemen. Dieser ist mit einem homogenen Positionierungsmuster aus Gittern oder Punkten ausgebildet, das es zwei auf dem Kalibrierboden angeordneten Messvorrichtungen ermöglicht, ihre Position auf dem Kalibrierboden anhand des Positionierungsmusters eindeutig zu bestimmen. Die Messvorrichtung arbeitet mit Bildaufnahme

Die beschriebenen aus dem Stand der Technik bekannten Routinen für das Kalibrieren des Knickwinkelsensors oder der Lenkwinkelsensoren eines mehrteiligen Straßenfahrzeugs ist aufwendig und daher nur für einteilige, wie in DE102017203426 A1, insbesondere PKW, oder zweiteilige Straßenfahrzeuge, wie in DE102014102302 A1, insbesondere Busse mit einem Vorder- und einem Hinterwagen praktikabel.

Demgegenüber liegt der vorliegenden Erfindung die Aufgabe zugrunde, eine Kalibriervorrichtung sowie ein Verfahren zum Kalibrieren zumindest eines Knickwinkelsensors oder eines Lenkwinkelsensors eines mehrteiligen Straßenfahrzeugs bereitzustellen, die ein vereinfachtes Kalibrieren insbesondere auch von komplexeren mehrteiligen Straßenfahrzeugen, beispielsweise von Trackless Trams mit mehreren Achsen, ermöglichen.

Die zuvor genannte Aufgabe wird durch eine Kalibriervorrichtung zum Kalibrieren zumindest eines Knickwinkelsensors oder eines Lenkwinkelsensors eines mehrteiligen Straßenfahrzeugs gemäß dem beigefügten unabhängigen Anspruch 1 gelöst. Dazu weist die Kalibriervorrichtung zumindest eine erste Ausrichthilfe auf, wobei sich die erste Ausrichthilfe in einer Längsrichtung gerade erstreckt. Dabei ist die erste Ausrichthilfe derart ausgestaltet ist, dass darauf Räder zumindest einer Achse eines ersten Wagens des mehrteiligen Straßenfahrzeugs und Räder einer Achse, vorzugsweise aber zweier Achsen, eines zweiten Wagens des mehrteiligen Straßenfahrzeugs derart auffahrbar sind, dass der erste und der zweite Wagen dann in einer Geradeausstellung ausgerichtet sind. Zudem weist die Kalibriervorrichtung mindestens ein erstes schwenkbares Segment auf, wobei das erste schwenkbare Segment an einer ersten Position in der Längsrichtung der ersten Ausrichthilfeangeordnet ist. Dabei ist das erste schwenkbare Segment um eine Schwenkachse aus einer Geradeausposition in eine eingelenkte Position schwenkbar, sodass ein lenkbares Rad einer Achse des Straßenfahrzeugs mit dem ersten Segment schwenkbar ist.

Die zuvor genannte Aufgabe wird auch durch ein System mit einer Kalibriervorrichtung, so wie sie in Ausführungsformen hierin nachstehend beschrieben wird, und mit einem mehrteiligen Straßenfahrzeug gelöst. Das mehrteilige Straßenfahrzeug weist eine Mehrzahl von beweglich miteinander verbundenen Wagen und eine Mehrzahl von Achsen mit Rädern mit Reifen auf.

Die erfindungsgemäße Kalibriervorrichtung stellt eine Kalibrierlehre bereit, auf welche das mehrteilige Straßenfahrzeug aufgefahren wird, wobei die erste Ausrichthilfe die gerade, fluchtende Hintereinanderanordnung der einzelnen Wagen des Straßenfahrzeugs definiert. So sind nach dem Auffahren auf die Ausrichthilfe die Wagen des Fahrzeugs per Definition gerade ausgerichtet, sodass alle Wagen exakt in einer Linie hintereinander positioniert sind. Die Knickwinkel sind in der Geradeausstellung und die Lenkwinkel sind in der Nullposition.

Die Gelenke und damit die Knickwinkelsensoren werdend typischerweise vor Einbau in das Fahrzeug auf einem Prüfstand vorkalibriert, sodass nach der Systemintegration im Fahrzeug nur noch die Geradeausstellung angepasst werden muss. Daher ist es ausreichend, für die Knickwinkelsensoren eine die die gerade, fluchtende Hintereinanderanordnung der Wagen definierende Lehre bereitzustellen.

Das Kalibrieren mit der erfindungsgemäßen Kalibrievorrichtung ist eindeutig reproduzierbar und auch für Service- und Wartungszwecke anwendbar. Kalibrierfahrten auf Testgeländen sowie der An- und Abbau von Kalibrierhilfsmitteln wie Achsvermessungszubehör entfallen. Die Kalibriervorrichtung kann am Ende einer Produktionslinie aufgebaut werden und hat den Platzbedarf von maximal einer Fahrzeuglänge. Individuelle Fehler durch das Bedienpersonal beim Einschätzen der korrekten Geradeausstellung und Nullposition werden reduziert oder vermieden. Der Personal- und Zeitaufwand ist signifikant reduziert.

Als Geradeausposition im Sinne der vorliegenden Anmeldung wird die Position der schwenkbaren Segmente bezeichnet, die, wenn sie auf die Räder der schwenkbaren Achse übertragen wird, eine Geradeausfahrt des Fahrzeugs bewirkt.

Während die Realisierung der erfindungsgemäßen Kalibriervorrichtung mit nur einer ersten Ausrichthilfe möglich ist, weist die Kalibriervorrichtung in einer Ausführungsform zusätzlich eine zweiten Ausrichthilfe auf. Dabei erstrecken sich die erste Ausrichthilfe und die zweite Ausrichthilfe in der Längsrichtung gerade und zueinander parallel, wobei die erste Ausrichthilfe und die zweite Ausrichthilfe in einem Spurabstand voneinander angeordnet sind.

Zur Realisierung der ersten und/oder zweiten Ausrichthilfe gibt es eine Vielzahl von Möglichkeiten. In einer Ausführungsform ist zumindest die erste oder die zweite Ausrichthilfe ausgewählt aus einer auf eine befahrbare Fläche aufgemalten oder projizierten Linie, einem gegenüber einer Fläche vorspringenden Steg, einer in eine Fläche eingelassenen Vertiefung und einem Schienenstrang oder einer Kombination davon. Eine Kombination dieser Realisierungen der ersten oder zweiten Ausrichthilfe kann realisiert sein, indem z.B. die erste Ausrichthilfe ein Schienenstrang ist und die zweite Ausrichthilfe eine auf eine befahrbare Fläche aufgemalte Linie ist. Eine Kombination kann aber auch dadurch realisiert sein, dass z.B. die erste Ausrichthilfe in Längsrichtung einen als aufgemalte Linie realisierten Abschnitt und einen Abschnitt, der als Schienenstrang ausgeführt ist, aufweist.

Ist zumindest die erste oder die zweite Ausrichthilfe ein erster oder zweiter Schienenstrang so ist in einer Ausführungsform das erste und/oder das zweite Segment ein erstes bzw. zweites Schienensegment.

Es versteht sich, dass die Länge zumindest der ersten oder der zweiten Ausrichthilfe in der Längsrichtung in einer Ausführungsform mindestens so groß ist, dass alle Räder des zu kalibrierenden Straßenfahrzeugs darauf passen.

Es ist denkbar nur ein Rad einer lenkbaren Achse auf einem ersten schwenkbaren Segment aufzunehmen. Allerdings weist die Kalibriervorrichtung in einer Ausführungsform ein Paar aus dem ersten schwenkbaren Segment und einem zweiten schwenkbaren Segment auf, wobei das zweite schwenkbare Segment an der ersten Position in der Längsrichtung angeordnet ist, und wobei das zweite schwenkbare Segment aus einer Geradeausposition in eine eingelenkte Position schwenkbar ist, so dass die lenkbaren Räder der Achse des Straßenfahrzeugs mit den ersten und zweiten Segmenten schwenkbar sind. In einer solchen Ausführungsform können die Lenkwinkelsensoren beider Räder einer Achse unabhängig voneinander kalibriert werden. Eine solche gesonderte Kalibrierung beider Räder einer Achse kann sowohl vorteilhaft sein, wenn die beiden Räder mechanisch über ein Lenkgestänge gekoppelt sind, als auch wenn die Lenkungen der beiden Räder einer Achse als Einzelradlenkungen ausgestaltet sind. Bei einer mechanischen Kopplung über ein Lenkgestänge wird in einer Ausführungsform ein Mittelwert der beiden Lenkwinkelsensoren zum Kalibrieren verwendet.

Das mehrteilige Straßenfahrzeug wird so auf die Kalibriervorrichtung aufgefahren, dass ein Rad einer lenkbaren Achse auf dem ersten schwenkbaren Segment eines Paars angeordnet ist und vorzugsweise das zweite Rad dieser Achse auf dem zweiten schwenkbaren Segment des gleichen Paars aus ersten und zweiten schwenkbaren Segmenten. Dann können durch aktives oder passives Einlenken der lenkbaren Räder dieser Achse ein oder mehrere Lenkwinkelsensoren dieser Achse kalibriert werden.

In einer Ausführungsform der Erfindung sind das erste und optional das zweite schwenkbare Segment jeweils nach Art eines Drehtellers aufgebaut. Während es möglich ist, das Segment um eine starre Achse, welche im Wesentlichen senkrecht zu der von der ersten Ausrichthilfe und der zweiten Ausrichthilfe aufgespannten Ebene steht, verschwenkbar auszugestalten, ist eine Ausführungsform der Erfindung bevorzugt, bei welcher das erste und das zweite schwenkbare Segment jeweils schwimmend gelagert sind, sodass bei dem Einlenken der Räder beispielsweise der Sturz der Räder, aber auch die Tatsache, dass die Schwenkachse typischerweise nicht durch den Aufstandspunkt der Räder geht, kompensiert wird.

In einer Ausführungsform der Erfindung weist das mehrteilige Straßenfahrzeug eine Mehrzahl von gelenkten Achsen auf, wobei die Mehrzahl von gelenkten Achsen vorzugsweise an zumindest einem ersten und einem zweiten Wagen angeordnet sind. Eine derartige Ausgestaltung eines mehrteiligen Straßenfahrzeugs entspricht der typischen Konstruktion einer Trackless Tram.

In einer Ausführungsform der Erfindung weist das mehrteilige Straßenfahrzeug eine Mehrzahl von Lenkwinkelsensoren an einer Mehrzahl von Achsen auf. In einer weiteren Ausführungsform weist das mehrteilige Straßenfahrzeug eine Mehrzahl von Wagen auf, wobei zwischen jeweils zwei Wagen ein Knickwinkelsensor zum Erfassen des Knickwinkels zwischen diesen zwei Wagen angeordnet ist.

Während die mit der erfindungsgemäßen Kalibriervorrichtung erzielbaren Vorteile gegenüber dem erwähnten Stand der Technik beim Kalibrieren eines Sensors eines zweiteiligen Straßenfahrzeugs, beispielsweise eines Schubgelenkbuses, noch überschaubar erscheint, sind die Vorteile bei einem Straßenfahrzeug mit mehr als zwei Wagen umso größer. Ein Straßenfahrzeug mit drei Wagen und sechs Achsen (zwei pro Wagen), wobei alle Räder an den sechs Achsen lenkbar sind, verfügt in der Regel über zwölf Lenkwinkelsensoren und zwei Knickwinkelsensoren (einer pro Gelenk zwischen zwei Wagen). Das heißt, 14 Sensoren müssen in einem solchen Fall kalibriert werden. Derartige Fahrzeuge sind auch unter dem Begriff "Trackless Tram" bekannt und ersetzen schienengebundene Zugsysteme durch Straßenfahrzeuge mit hoher Kapazität, die entweder auf eigenen Stra-ßen fahren oder aber auf öffentlichen Straßen. Aufgrund ihrer Länge müssen diese Fahrzeuge eine Mehrzahl von gelenkten Achsen aufweisen.

Während die Kalibriervorrichtung auch für herkömmliche Fahrzeuge mit zwei Wagen und einer gelenkten Achse einsetzbar ist, weist die Kalibriervorrichtung in einer Ausführungsform mindestens zwei erste schwenkbaren Segmente auf, die in der Längsrichtung voneinander beabstandet sind. In einer Ausführungsform weist die Kalibriervorrichtung mindestens zwei Paare von ersten und zweiten schwenkbaren Segmenten auf, wobei die Paare in der Längsrichtung jeweils voneinander beabstandet sind.

In einer Ausführungsform der Erfindung weist die Kalibriervorrichtung ein Winkelmessgerät zum Erfassen eines Schwenkwinkels zumindest des ersten oder des zweiten schwenkbaren Segments gegenüber der Geradeausposition auf. Es ist möglich, mit nur einem Winkelmessgerät pro Achse zu arbeiten, so lange gewährleistet ist, dass das zweite Rad und damit ggf. das zweite Segment die gleiche Schwenkbewegung vollführt wie das erste. Dennoch ist eine Ausführungsform zweckmäßig, bei der jedes schwenkbare Segment eines Paars ein Winkelmessgerät aufweist.

Grundsätzlich kommen als Winkelmessgerät alle möglichen Typen von Messeinrichtungen in Betracht, die es ermöglichen, den Schwenkwinkel des schwenkbaren Segments gegenüber der Geradeausposition des Segments und damit den tatsächlichen Lenkwinkel des jeweiligen Rades des Fahrzeugs zu messen. Ein Beispiel hierfür ist ein vom Auge eines Bedieners ablesbares Skalenelement mit einer Winkelskala und einem Zeiger. In Betracht kommen jedoch auch elektronische, optische und andere Winkelmessgeräte, welche unmittelbar ein, beispielsweise optisches oder elektrisches, Messsignal ausgeben. Dieses Messsignal stellt dann ein Maß für den Schwenkwinkel dar.

In einer Ausführungsform der Erfindung weist die Kalibriervorrichtung ein Display zum visuellen Anzeigen des Schwenkwinkels auf. Dabei kann das Display eine mechanische Anzeige mit einer Skala und einem Zeiger sein, aber auch ein Bildschirm sein. Die auf dem Display angezeigte Visualisierung des Messsignals für den Schwenkwinkel wird dann von einem Benutzer ausgelesen und in die Fahrzeugsteuerung eingegeben.

Alternativ oder zusätzlich zu einem Display weist in einer Ausführungsform die Kalibriervorrichtung eine Steuerung auf, wobei die Steuerung wirksam mit dem Winkelmessgerät verbunden ist, sodass die Steuerung in dem Betrieb der Kalibriervorrichtung ein Messsignal von dem Winkelmessgerät erhält. Dabei weist die Steuerung eine Schnittstelle auf, die mit einer dazu komplementären Schnittstelle des Straßenfahrzeugs verbindbar ist, wobei die Steuerung derart eingerichtet ist, dass in einem Betrieb der Kalibriervorrichtung die Steuerung über die Schnittstelle ein Kalibriersignal für zumindest den Knickwinkelsensor oder den Lenkwinkelsensor des Straßenfahrzeugs ausgibt.

In einer Ausführungsform wird die Schwenkbewegung der ersten und/oder zweiten Segmente durch Einlenken der Räder der Achse des Fahrzeugs mittels der Lenkung bewirkt.

Es ist jedoch auch möglich, stattdessen das erste oder das zweite Segment mit einem Antriebsmotor zu verbinden, sodass das erste oder das zweite Segment motorisch angetrieben schwenkbar ist. Daher weist in einer Ausführungsform Kalibriervorrichtung zumindest einen Antriebsmotor auf, wobei der Antriebsmotor wirksam zumindest mit dem ersten oder den zweiten Segment verbunden ist, sodass zumindest das erste oder das zweite Segment motorisch angetrieben schwenkbar ist. Während es möglich ist, beide Segmente eines Paars von Segmenten anzutreiben, genügt es in einer Ausführungsform, nur eines der beiden Segmente anzutreiben. Die Schwenkbewegung des zweiten Segments des Paars erfolgt dann über die mechanische Kopplung der Räder über die Lenkung. In einer solchen Ausführungsform kann der Kalibrierprozess vollständig automatisch ablaufen, wobei ein Bediener weder den Schwenkwinkel ablesen muss noch das Fahrzeug lenken.

In einer Ausführungsform der Erfindung ist zumindest das erste oder das zweite Segment in der Geradeausstellung arretierbar. Auf diese Weise kann gewährleistet werden, dass das Fahrzeug nach dem Auffahren nicht nur mit seinen Wagen in der Längsrichtung ausgerichtet ist, sondern auch die lenkbaren Räder, vorzugsweise die Räder aller lenkbaren Achsen, in der Geradeausstellung sind. Zum Kalibrieren der Lenkwinkelsensoren an den Endanschlägen ist diese Arretierung dann, vorzugsweise automatisiert, aufhebbar.

In einer Ausführungsform der Erfindung ist zumindest die erste oder die zweite Ausrichthilfe ein Schienenstrang, wobei zumindest der erste oder der zweite Schienenstrang ein L-förmiges oder U-förmiges Profil aufweist. Dabei hat das Profil eine Lauffläche für eine Reifenaufstandsfläche eines Reifens eines Rades des Straßenfahrzeugs und mindestens eine Führungsfläche zum Führen einer Seitenwand des Reifens. Vorzugsweise weisen der erste und der zweite Schienenstrang beide ein solches L-förmiges oder U-förmiges Profil auf. Mithilfe eines solchen Profils ist gewährleistet, dass das mehrteilige Straßenfahrzeug nach dem Auffahren auf die Kalibriervorrichtung mit all seinen Wagen in der Nullposition hintereinander ausgerichtet ist. In einer Ausführungsform weisen dann auch die schwenkbaren Segmente, die in einer solchen Ausführungsform Schienensegmente sind, ein solches L-förmiges oder U-förmiges Profil auf. Dann ist gewährleistet, dass die Räder des mehrteiligen Straßenfahrzeugs nach dem Auffahren alle in der Geradeausposition ausgerichtet sind.

In einer dazu alternativen Ausführungsform weist zumindest der erste oder der zweite Schienenstrang eine Lauffläche für eine Reifenaufstandsfläche eines Reifens eines Rades des Straßenfahrzeugs und eine Führungskante zum Führen eines Spurkranzes des Rades auf. In einer Ausführungsform sind sowohl der erste als auch der zweite Schienenstrang mit einer Lauffläche und einer Führungskante ausgestaltet.

In einer solchen Ausführungsform umfasst das System aus der Kalibriervorrichtung und dem mehrteiligen Straßenfahrzeug dann eine Mehrzahl von Spurkränzen, wobei die Spurkränze abnehmbar mit den Rädern an einer Mehrzahl von Achsen verbunden sind. Da es sich erfindungsgemäß um ein Straßenfahrzeug handelt, weist dieses naturgemäß keine Spurkränze im täglichen Gebrauch auf. Diese müssen in einer solchen Ausführungsform vor dem Kalibrieren an den Rädern des Fahrzeugs montiert und nach dem Kalibrieren wieder abgenommen werden.

In einer Ausführungsform der Kalibriervorrichtung, insbesondere aber in einer Ausführungsform der Kalibriervorrichtung, bei welcher der erste und/oder der zweite Schienenstrang jeweils ein L-förmiges oder U-förmiges Profil aufweisen, ist der Spurabstand zwischen der ersten und der zweiten Ausrichthilfe einstellbar veränderbar. Auf diese Weise ist die Kalibriervorrichtung an Straßenfahrzeuge mit unterschiedlicher Spur einstellbar.

In einer Ausführungsform der Erfindung ist zudem ein Abstand in der Längsrichtung zwischen zwei ersten schwenkbaren Segmenten oder zwischen zwei Paaren mit jeweils einem ersten und einem zweiten schwenkbaren Segment einstellbar veränderbar. Auf diese Weise ist die Kalibriervorrichtung an unterschiedliche Bauarten von Straßenfahrzeugen mit einem voneinander verschiedenen Radstand anpassbar.

Die vorliegende Erfindung betrifft auch die Verwendung einer Kalibriervorrichtung, so wie sie zuvor in Ausführungsformen davon beschrieben wurde, oder eines Systems mit einer solchen Kalibriervorrichtung und einem mehrteiligen Straßenfahrzeug, so es zuvor in Ausführungsformen davon beschrieben wurde, zum Kalibrieren zumindest eines Knickwinkelsensors oder eines Lenkwinkelsensors eines mehrteiligen Straßenfahrzeugs.

Zumindest eine der zuvor genannten Aufgaben wird auch durch ein Verfahren zum Kalibrieren zumindest eines Knickwinkelsensors oder eines Lenkwinkelsensors eines mehrteiligen Straßenfahrzeugs mit einer Mehrzahl von beweglich miteinander verbundenen Wagen durch den beigefügten unabhängigen auf das Verfahren gerichteten Anspruch gelöst. Dazu weist das Verfahren die Schritte auf:
Auffahren einer Mehrzahl von über die Mehrzahl von Wagen verteilten Rädern des Straßenfahrzeugs auf eine erste Ausrichthilfe,
   wobei sich die erste Ausrichthilfe in einer Längsrichtung gerade erstreckt,
   so dass zumindest ein Rad einer lenkbaren Achse an einer ersten Position in der Längsrichtung auf einem ersten um eine Schwenkachse schwenkbaren Segment angeordnet ist und
   so dass die Wagen entlang der Längsrichtung ausgerichtet sind,
Ausrichten des ersten schwenkbaren Segments in eine Geradeausposition parallel zu der Längsrichtung und
zumindest
   Markieren eines momentanen Messwerts des Lenkwinkelsensors der lenkbaren Achse als Geradestellung in einer Steuerung des Fahrzeugs oder
   Markieren eines momentanen Messwerts des Knickwinkelsensors als Nullposition in einer Steuerung des Straßenfahrzeugs.

Soweit im Folgenden Aspekte der Erfindung im Hinblick auf das Verfahren beschrieben werden, so gelten diese auch für die zuvor beschriebene Kalibriervorrichtung zum Kalibrieren zumindest eines Knickwinkelsensors oder eines Lenkwinkelsensors des mehrteiligen Straßenfahrzeugs und umgekehrt. Soweit das Verfahren mit einer Kalibriervorrichtung gemäß einer Ausführungsform dieser Erfindung ausgeführt wird, so weist diese die entsprechenden Einrichtungen hierfür auf. Insbesondere sind Ausführungsformen der Kalibriervorrichtung zum Ausführen der hier beschriebenen Ausführungsformen des Verfahrens geeignet.

In einer Ausführungsform weist die Kalibriervorrichtung weiterhin eine zweite Ausrichthilfe auf, wobei sich die erste Ausrichthilfe und die zweite Ausrichthilfe in der Längsrichtung gerade und zueinander parallel erstrecken, und wobei die erste Ausrichthilfe und die zweite Ausrichthilfe in einem Spurabstand voneinander angeordnet sind. Es versteht sich, dass bei Verwendung einer solchen Variante der Kalibriervorrichtung die Mehrzahl von über die Mehrzahl von Wagen verteilten Rädern des Straßenfahrzeugs auf die erste Ausrichthilfe und die zweite Ausrichthilfe aufgefahren werden.

In einer Ausführungsform weist das Verfahren zusätzlich die Schritte auf:
Schwenken des Rades mit dem ersten Segment in einer ersten Lenkrichtung in eine eingelenkte Position der lenkbaren Achse,
Messen des tatsächlichen Schwenkwinkels des ersten Segments gegenüber der Geradeausposition und
Zuordnen des tatsächlichen Schwenkwinkels zu einem momentanen Messsignal des Lenkwinkelsensors der lenkbaren Achse in der Steuerung des Straßenfahrzeugs.

Es versteht sich, dass in einerweiteren Ausführungsform diese Schritte für eine zweite, der ersten Lenkrichtung entgegengesetzten Lenkrichtung wiederholt werden. Dazu weist das Verfahren dann die Schritte auf
Schwenken des Rades mit dem ersten Segment in einer zweiten, der ersten Lenkrichtung entgegengesetzten Lenkrichtung in eine eingelenkte Position der lenkbaren Achse, Messen des tatsächlichen Schwenkwinkels des ersten Segments gegenüber der Geradeausposition und
Zuordnen des tatsächlichen Schwenkwinkels zu einem momentanen Messsignal des Lenkwinkelsensors der lenkbaren Achse in der Steuerung des Straßenfahrzeugs.

Die gleichen Verfahrensschritte können zusätzlich oder alternativ auch mit einem zweiten Segment für das jeweils andere Rad der lenkbaren Achse ausgeführt werden.

In einer Ausführungsform ist die eingelenkte Position der lenkbaren Achse der jeweilige Lenkanschlag, d.h. die maximal eingelenkte Position des jeweiligen Rades.

In einer Ausführungsform wir das Rad mit dem ersten Segment nacheinander in eine Mehrzahl von ersten oder zweiten eingelenkte Positionen geschwenkt, so dass über einen Schwenkbereich, vorzugsweise über einen vollständigen Schwenkbereich zwischen der Geradeausposition und dem jeweiligen Lenkanschlag, eine Mehrzahl von tatsächlichen Schwenkwinkeln des ersten Segments gegenüber der Geradeausposition gemessen und der jeweilige tatsächliche Schwenkwinkel zu jeweils einem momentanen Messsignal des Lenkwinkelsensors der lenkbaren Achse in der Steuerung des Straßenfahrzeugs zugeordnet wird. Auf diese Weise wird eine Kennlinie des Lenkwinkelsensors mit einer Schar von Messwerten erfasst.

In einer Ausführungsform weist das Verfahren zusätzlich die Schritte auf:
vor dem Auffahren des Fahrzeugs auf die erste Ausrichthilfe Arretieren zumindest des ersten Segments in der Geradeausposition,
Freigeben der Arretierung des ersten Segments vor dem Schwenken der Räder und
erneutes Arretieren zumindest des ersten Segments, wenn das Kalibrieren abgeschlossen und das erste Segment wieder in der Geradeausposition ist.

Weitere Vorteile, Merkmale und Anwendungsmöglichkeiten der vorliegenden Erfindung werden anhand der folgenden Beschreibung einer Ausführungsform und der dazugehörigen Figuren deutlich. In den Figuren sind gleiche Elemente mit gleichen Bezugszeichen bezeichnet.
- Figur 1: ist eine schematische isometrische Darstellung einer Ausführungsform der erfindungsgemäßen Kalibriervorrichtung.
- Figur 2: ist eine schematische, teilweise weggebrochene Draufsicht auf den ersten Schienenstrang.

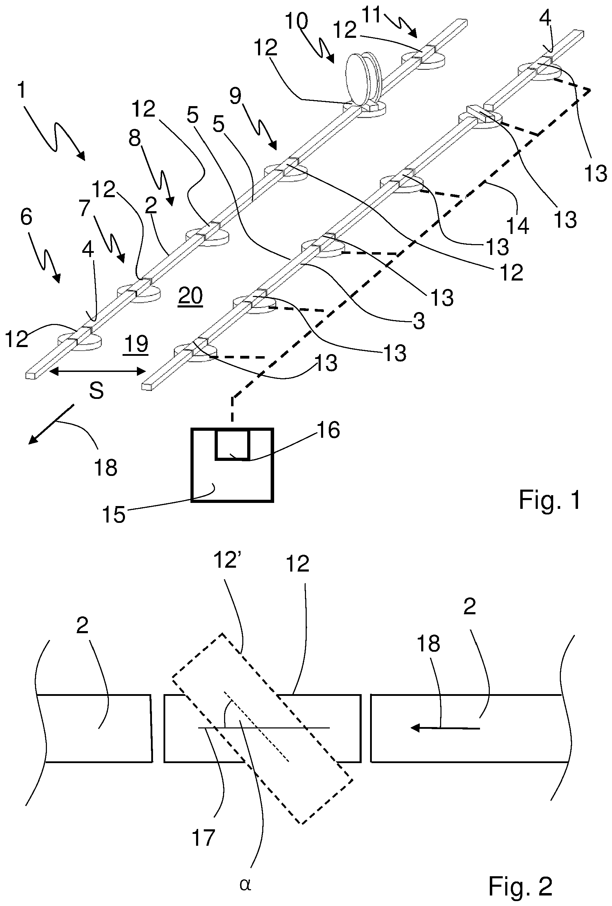

In Figur 1 ist eine Ausführungsform einer Kalibriervorrichtung 1 schematisch dargestellt. Die gezeigte Kalibriervorrichtung dient dem Kalibrieren eines dreiteiligen Straßenfahrzeugs, nämlich einer Trackless Tram mit drei Wagen, wobei jeweils zwei der Wagen beweglich miteinander verbunden sind. Jeder der drei Wagen weist zwei gelenkte Achsen auf.

Daher verfügt das zu kalibrierende Fahrzeug über zwei Knickwinkelsensoren und zwölf Lenkwinkelsensoren. Die Knickwinkelsensoren dienen dazu, den Knickwinkel zwischen zwei beweglich miteinander verbundenen Wagen gegenüber der Nullposition zu messen. Die Nullposition ist definiert durch den geraden, fluchtenden Hintereinanderlauf der Wagen. Die Lenkwinkelsensoren des Fahrzeugs messen hingegen den Lenkwinkel eines jeden Rades gegenüber dem Geradeauslauf der jeweiligen Achse.

Die Kalibriervorrichtung 1 besteht aus einem ersten Schienenstrang 2 und einem zweiten Schienenstrang 3 als Realisierungen der ersten und zweiten Ausrichthilfen im Sinne der vorliegenden Anmeldung, die parallel zueinander und gerade ausgerichtet sind. Fährt die Trackless Tram geführt auf den ersten und den zweiten Schienenstrang 2, 3, so sind die drei Wagen per Definition fluchtend ausgerichtet und die Nullposition ist festgelegt. Ordnet man nun die momentanen Messwerte der Knickwinkelsensoren des Fahrzeugs der Nullposition zu, so hat man den für die Kalibrierung der Knickwinkelsensoren wesentlichen Wert festgelegt. Die Zuordnung der Nullposition zu dem momentanen Messwert des jeweiligen Knickwinkelsensors wird in der Fahrzeugsteuerung oder aber in der Gelenksteuerung der Gelenke zwischen den Wagen gespeichert.

Zum Führen des Fahrzeugs bzw. dessen Rädern weist in der dargestellten Ausführungsform jeder Schienenstrang 2, 3 jeweils eine Lauffläche 4 für die Reifenaufstandsflächen der Reifen der Räder des Fahrzeugs und eine Führungskante 5 auf. Die Führungskanten 5 führen jeweils einen für das Kalibrieren an jedem Rad montierten Spurkranz. Daher verhält sich in der gezeigten Ausführungsform das Straßenfahrzeug auf der Kalibriervorrichtung 1 wie ein Schienenfahrzeug.

Weiterhin weist die Kalibriervorrichtung 1 der Anzahl von Achsen des Fahrzeugs entsprechend sechs Paare 6 bis 11 von ersten und zweiten schwenkbaren Schienensegmenten 12, 13 auf. Dabei bilden dieses ersten und zweiten schwenkbaren Schienensegmente 12, 13 konkrete Ausgestaltungen der schwenkbaren Segmente im Sinne der vorliegenden Anmeldung. Diese schwenkbaren Schienensegmente 12, 13 dienen dem Kalibrieren jeweils eines Lenkwinkelsensors an jedem Rad. In der dargestellten Ausführungsform sind die schwenkbaren ersten und zweiten Schienensegmente 12, 13 in der in Figur 1 gezeigten Geradeausposition arretierbar, sodass nach dem Auffahren des Fahrzeugs auf die Kalibriervorrichtung 1 alle Räder definiert in der Geradeausstellung sind.

Dann wird jedem momentanen Messwert der zwölf Lenkwinkelsensoren die Geradeausstellung zugeordnet und in der Fahrzeugsteuerung abgelegt.

In einem nächsten Schritt wird beim Kalibrieren die Arretierung der einzelnen schwenkbaren Schienensegmente 12, 13 freigegeben, sodass diese zusammen mit den Rädern des Fahrzeugs verschwenkbar sind.

In der dargestellten Ausführungsform sind die schwenkbaren Schienensegmente 12, 13 schwimmend schwenkbar gelagert, sodass der Tatsache Rechnung getragen wird, dass die Schwenkachse der Räder nicht notwendigerweise durch die Aufstandsflächen der Räder geht.

Während der Ausführungsform denkbar sind, bei denen die schwenkbaren Schienensegmente 12, 13 motorisch angetrieben geschwenkt werden, sodass die Räder passiv mitschwenken, ist es in der dargestellten Ausführungsform umgekehrt. Zum Verschwenken der Schienensegmente 12, 13 wird die Lenkung des Fahrzeugs bzw. der einzelnen lenkbaren Achsen des Fahrzeugs betätigt.

Zum Festlegen zweier weiterer ausgezeichneter Punkte in der Kalibrierung der Lenkwinkelsensoren werden alle Räder zunächst in eine erste Drehrichtung bis zum Erreichen des jeweiligen Lenkanschlags eingelenkt. Dabei kann die Richtung der Schwenkbewegungen der einzelnen Räder voneinander verschieden oder auch gleich sein. Stellt man sich die Kurvenfahrt einer Trackless Tram mit drei Wagen und jeweils zwei gelenkten Achsen pro Wagen vor, so werden beispielsweise in der Kurvenfahrt an jedem Wagen die Räder der ersten Achse in die eine Richtung eingelenkt und die Räder der zweiten Achse in die andere Richtung eingelenkt. Nach Erreichen des maximalen Einlenkwinkels jedes Rades in einer ersten Richtung wird das momentane Messsignal des Lenkwinkelsensors des jeweiligen Rades dem tatsächlich gemessenen Schwenkwinkel α des schwenkbaren Schienensegments 12, 13 gegenüber der Geradeausposition zugeordnet.

Dann wird der gleiche Vorgang für jedes Rad in der jeweils entgegengesetzten Schwenkrichtung bis zum Erreichen des zweiten Lenkanschlags wiederholt und das momentane Messsignal des Lenkwinkelsensors dem tatsächlich gemessenen Schwenkwinkel des jeweiligen Schienensegments gegenüber der Geradeausposition zugeordnet.

Um eine einfache Kalibrierung aller sechs Achsen bzw. zwölf Räder zu ermöglichen, weist jedes schwenkbare Schienensegment 12, 13 ein elektronisches Winkelmessgerät auf, welches den Schwenkwinkel mit Richtung und Betrag gegenüber der Geradeausposition des jeweiligen Schienensegments erfasst und über eine Busleitung 14 an eine zentrale Steuerung 15 der Kalibriervorrichtung 1 ausgibt. Damit die von den Winkelmessgeräten gemessenen Werte für die Auslenkung der schwenkbaren Schienensegmente 12, 13 gegenüber der Geradeausposition in der Fahrzeugsteuerung den jeweiligen Messwerten der Lenkwinkelsensoren zugeordnet werden können, verfügt die Steuerung 15 der Kalibriervorrichtung 1 über eine Schnittstelle 16. Die Schnittstelle 16 ist mit einer dazu komplementären Schnittstelle des jeweiligen Fahrzeugs verbindbar.

Figur 2 zeigt eine schematische Draufsicht auf den ersten Schienenstrang 2 mit einem schwenkbaren ersten Schienensegment 12. Gezeigt ist die Geradeausposition 17 und die Position des ersten Schienensegments 12' bei Erreichen eines beispielhaften Lenkanschlags einer Lenkbewegung eines Rades. Der zu messende Schwenkwinkel ist in der Figur als α bezeichnet.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichen

- 1: Kalibriervorrichtung
- 2: erster Schienenstrang
- 3: zweiter Schienenstrang
- 4: Lauffläche
- 5: Führungskante
- 6, 7, 8, 9, 10, 11: Paare
- 12, 12', 13: Schienensegment
- 14: Busleitung
- 15: Steuerung
- 16: Schnittstelle
- 17: Geradeausposition
- 18: Längsrichtung
- 19: erste Position in der Längsrichtung
- 20: zweite Position in der Längsrichtung

- α: Schwenkwinkel
- S: Spurabstand

## Patentansprüche

1. Kalibriervorrichtung (1) zum Kalibrieren zumindest eines Knickwinkelsensors oder eines Lenkwinkelsensors eines mehrteiligen Straßenfahrzeugs
mit einer ersten Ausrichthilfe (2),
wobei sich die erste Ausrichthilfe (2) in einer Längsrichtung (18) gerade erstreckt, und
wobei die erste Ausrichthilfe (2) derart ausgestaltet ist, dass darauf Räder zumindest einer Achse eines ersten Wagens des mehrteiligen Straßenfahrzeugs und Räder einer Achsen eines zweiten Wagens des mehrteiligen Straßenfahrzeugs derart auffahrbar sind, dass der erste und der zweite Wagen dann in einer Geradeausstellung ausgerichtet sind,
mit mindestens einem ersten schwenkbaren Segment (12, 12'),
wobei das erste schwenkbare Segment (12, 12') an einer ersten Position (19) in der Längsrichtung der ersten Ausrichthilfe (2) angeordnet ist und
wobei das erste Segment (12, 12') aus einer Geradeausposition (17) in eine eingelenkte Position schwenkbar ist, so dass ein lenkbares Rad einer Achse des mehrteiligen Straßenfahrzeugs mit dem ersten Segment (12, 12`) schwenkbar ist.

2. Kalibriervorrichtung (1) nach dem vorhergehenden Anspruch, wobei die Kalibriervorrichtung (1) eine zweite Ausrichthilfe (3) aufweist, wobei sich die erste Ausrichthilfe (2) und die zweite Ausrichthilfe (3) in der Längsrichtung (18) gerade und zueinander parallel erstrecken, und wobei die erste Ausrichthilfe (2) und die zweite Ausrichthilfe (3) in einem Spurabstand (S) voneinander angeordnet sind.

3. Kalibriervorrichtung (1) nach einem der vorhergehenden Ansprüche, wobei zumindest die erste oder die zweite Ausrichthilfe (2, 3) ausgewählt ist aus einer auf eine befahrbare Fläche aufgemalten oder projizierten Linie, einem gegenüber einer Fläche vorspringenden Steg, einer in eine Fläche eingelassenen Vertiefung und einem Schienenstrang oder einer Kombination davon.

4. Kalibriervorrichtung (1) nach einem der vorhergehenden Ansprüche, wobei die Kalibriervorrichtung (1) ein Paar (6, 7, 8, 9, 10, 11) aus dem ersten schwenkbaren Segment (12, 12') und einem zweiten schwenkbaren Segment (13) aufweist,
wobei das zweite schwenkbare Segment (13) an der ersten Position (19) in der Längsrichtung (18) angeordnet ist, und
wobei das zweite schwenkbare Segment (13) aus einer Geradeausposition (17) in eine eingelenkte Position schwenkbar ist, so dass die lenkbaren Räder der Achse des Straßenfahrzeugs mit den ersten und zweiten Segmenten (12, 12', 13) schwenkbar sind.

5. Kalibriervorrichtung (1) nach einem der vorhergehenden Ansprüche, wobei die Kalibriervorrichtung (1) ein Winkelmessgerät zum Erfassen eines Schwenkwinkels (α) zumindest des ersten oder des zweiten schwenkbaren Segments (12, 12', 13) gegenüber der Geradeausposition (17) aufweist.

6. Kalibriervorrichtung (1) nach einem der vorhergehenden Ansprüche, wobei die Kalibriervorrichtung (1) zumindest ein weiteres erstes schwenkbares Segment (12, 12'), vorzugsweise ein weiteres Paar (6, 7, 8, 9, 10, 11) von ersten und zweiten schwenkbaren Segmenten (12, 12', 13), an einer zweiten Position (20) in der Längsrichtung (18) aufweist.

7. Kalibriervorrichtung (1) nach einem der vorhergehenden Ansprüche soweit von Anspruch 5 abhängig, wobei die Kalibriervorrichtung (1) eine Steuerung (15) aufweist, wobei die Steuerung (15) wirksam mit dem Winkelmessgerät verbunden ist, so dass die Steuerung (15) in dem Betrieb der Kalibriervorrichtung (1) ein Messsignal von dem Winkelmessgerät erhält, und wobei die Steuerung (15) eine Schnittstelle (16) aufweist, die mit einer Schnittstelle (16) des Straßenfahrzeugs verbindbar ist und wobei die Steuerung (15) derart eingerichtet ist, dass in einem Betrieb der Kalibriervorrichtung (1) die Steuerung (15) über die Schnittstelle (16) ein Kalibriersignal für zumindest den Knickwinkelsensor oder den Lenkwinkelsensor des Straßenfahrzeugs ausgibt.

8. Kalibriervorrichtung (1) nach einem der vorhergehenden Ansprüche, wobei zumindest die erste oder die zweite Ausrichthilfe ein Schienenstrang (2, 3) ist und wobei zumindest der erste oder der zweite Schienenstrang (2, 3) ein L-förmiges oder U-förmiges Profil mit einer Lauffläche (4) für eine Reifenaufstandsfläche eines Reifens eines Rades des Straßenfahrzeugs und mindestens einer Führungsfläche zum Führen einer Seitenwand des Reifens aufweist.

9. Kalibriervorrichtung (1) nach einem der vorhergehenden Ansprüche, wobei zumindest das erste oder das zweite Segment (12, 12', 13) in der Geradeausposition (17) arretierbar ist.

10. Kalibriervorrichtung (1) nach einem der vorhergehenden Ansprüche, wobei ein Abstand in der Längsrichtung (18) zwischen zwei ersten schwenkbaren Segmenten (12, 12') einstellbar veränderbar ist.

11. System mit einer Kalibriervorrichtung (1) nach einem der vorhergehenden Ansprüche und einem mehrteiligen Straßenfahrzeug,
wobei das mehrteilige Straßenfahrzeug eine Mehrzahl von beweglich miteinander verbundenen Wagen und eine Mehrzahl von Achsen mit Rädern mit Reifen aufweist.

12. System nach dem vorhergehenden Anspruch, wobei das mehrteilige Straßenfahrzeug eine Mehrzahl von gelenkten Achsen aufweist, wobei die Mehrzahl von gelenkten Achsen vorzugsweise an zumindest einem ersten und einem zweiten Wagen angeordnet sind.

13. Verwendung einer Kalibriervorrichtung (1) nach einem der Ansprüche 1 bis 10 oder eines Systems nach einem der Ansprüche 11 oder 12 zum Kalibrieren zumindest eines Knickwinkelsensors oder eines Lenkwinkelsensors eines mehrteiligen Straßenfahrzeugs.

14. Verfahren zum Kalibrieren zumindest eines Knickwinkelsensors oder eines Lenkwinkelsensors eines mehrteiligen Straßenfahrzeugs mit einer Mehrzahl von beweglich miteinanderverbundenen Wagen mit den Schritten
Auffahren einer Mehrzahl von über die Mehrzahl von Wagen verteilten Rädern des Straßenfahrzeugs auf eine erste Ausrichthilfe (2),
wobei sich die erste Ausrichthilfe (2) in einer Längsrichtung (18) gerade erstreckt,
so dass zumindest ein Rad einer lenkbaren Achse an einer ersten Position (19) in der Längsrichtung (18) auf einem ersten um eine Schwenkachse schwenkbaren Segment (12, 12`)angeordnet ist und
so dass die Wagen entlang der Längsrichtung (18) in einer Geradeausstellung ausgerichtet sind,
Ausrichten des ersten schwenkbaren Segments (12, 12`) in eine Geradeausposition (17) parallel zu der Längsrichtung (18) und
zumindest
Markieren eines momentanen Messwerts des Lenkwinkelsensors der lenkbaren Achse als Geradestellung in einer Steuerung (15) des Straßenfahrzeugs oder
Markieren eines momentanen Messwerts des Knickwinkelsensors als Nullposition in einer Steuerung (15) des Straßenfahrzeugs.

15. Verfahren nach Anspruch 14, wobei das Verfahren zusätzlich die Schritte aufweist
Schwenken des Rades mit dem ersten Segment (12, 12') in einer ersten Lenkrichtung in eine eingelenkte Position der lenkbaren Achse,
Messen des tatsächlichen Schwenkwinkels des ersten Segments (12, 12') gegenüber der Geradeausposition (17) und
Zuordnen des tatsächlichen Schwenkwinkels zu einem momentanen Messsignal des Lenkwinkelsensors der lenkbaren Achse in der Steuerung (15) des Fahrzeugs.

16. Verfahren nach einem der Ansprüche 14 oder 15, wobei das Verfahren zusätzlich die Schritte aufweist
vor dem Auffahren des Fahrzeugs auf die erste Ausrichthilfe Arretieren des ersten Segments (12, 12') in der Geradeausposition (17),
Freigeben der Arretierung des ersten Segments (12, 12') vor dem Schwenken der Räder und
erneutes Arretieren des ersten Segments (12, 12'), wenn das Kalibrieren abgeschlossen und das erste Segment (12, 12') wieder in der Geradeausposition (17) ist.

## Claims

1. A calibration device (1) for calibrating at least one bending angle sensor or a steering angle sensor of a multi-part road vehicle,
having a first alignment aid (2),
wherein the first alignment aid (2) extends straight in a longitudinal direction (18), and
wherein the first alignment aid (2) is formed in such a way that wheels of at least one axle of a first carriage of the multi-part road vehicle and wheels of an axle of a second carriage of the multi-part road vehicle can be driven thereon in such a way that the first and the second carriage are then aligned in a straight-ahead position,
having at least one first pivotable segment (12, 12'),
wherein the first pivotable segment (12, 12') is arranged at a first position (19) in the longitudinal direction of the first alignment aid (2), and wherein the first segment (12, 12') can be pivoted from a straight-ahead position (17) into a turned position, so that a steerable wheel of an axle of the multi-part road vehicle can be pivoted with the first segment (12, 12').

2. The calibration device (1) according to the preceding claim, wherein the calibration device (1) comprises a second alignment aid (3), wherein the first alignment aid (2) and the second alignment aid (3) extend straight and in parallel with one another in the longitudinal direction (18), and wherein the first alignment aid (2) and the second alignment aid (3) are arranged at a track spacing (S) from one another.

3. The calibration device (1) according to any of the preceding claims, wherein at least the first or the second alignment aid (2, 3) is selected from a line which is painted or projected onto a drivable surface, a projection protruding with respect to a surface, a recess recessed into a surface and a rail track or a combination thereof.

4. The calibration device (1) according to any of the preceding claims, wherein the calibration device (1) comprises a pair (6, 7, 8, 9, 10, 11) consisting of the first pivotable segment (12, 12') and a second pivotable segment (13),
wherein the second pivotable segment (13) is arranged at the first position (19) in the longitudinal direction (18), and
wherein the second pivotable segment (13) can be pivoted from a straight-ahead position (17) into a turned position, so that the steerable wheels of the axle of the road vehicle can be pivoted with the first and second segments (12, 12', 13).

5. The calibration device (1) according to any of the preceding claims, wherein the calibration device (1) comprises an angle measuring device for detecting a pivot angle (α) of at least the first or the second pivotable segment (12, 12', 13) relative to the straight-ahead position (17).

6. The calibration device (1) according to any of the preceding claims, wherein the calibration device (1) comprises at least one further first pivotable segment (12, 12'), preferably a further pair (6, 7, 8, 9, 10, 11) of first and second pivotable segments (12, 12', 13), at a second position (20) in the longitudinal direction (18).

7. The calibration device (1) according to any of the preceding claims, if dependent on claim 5, wherein the calibration device (1) has a controller (15), wherein the controller (15) is operatively connected to the angle measuring device, so that the controller (15) receives a measurement signal from the angle measuring device during operation of the calibration device (1), and wherein the controller (15) comprises an interface (16) which can be connected to an interface (16) of the road vehicle, and wherein the controller (15) is configured such that during operation of the calibration device (1), the controller (15) outputs a calibration signal for at least the bending angle sensor or the steering angle sensor of the road vehicle via the interface (16).

8. The calibration device (1) according to any of the preceding claims, wherein at least the first or the second alignment aid is a rail track (2, 3), and wherein at least the first or the second rail track (2, 3) comprises an L-shaped or U-shaped profile having a running surface (4) for a tire contact surface of a tire of a wheel of the road vehicle and at least one guide surface for guiding a side wall of the tire.

9. The calibration device (1) according to any of the preceding claims, wherein at least the first or the second segment (12, 12', 13) can be locked in the straight-ahead position (17).

10. The calibration device (1) according to any of the preceding claims, wherein a distance in the longitudinal direction (18) between two first pivotable segments (12, 12') can be adjusted.

11. A system having a calibration device (1) according to any of the preceding claims and a multipart road vehicle,
wherein the multi-part road vehicle comprises a plurality of carriages which are movably interconnected and a plurality of axles having wheels with tires.

12. The system according to the preceding claim, wherein the multi-part road vehicle has a plurality of steered axles, the plurality of steered axles preferably being arranged on at least a first and a second carriage.

13. A use of the calibration device (1) according to any of the claims 1 to 10 or a system according to any of the claims 11 or 12 for calibrating at least one bending angle sensor or a steering angle sensor of a multi-part road vehicle.

14. A method for calibrating at least one bending angle sensor or a steering angle sensor of a multi-part road vehicle having a plurality of carriages which are movably interconnected, comprising the steps of
moving a plurality of wheels distributed over the plurality of carriages of the road vehicle onto a first alignment aid (2),
wherein the first alignment aid (2) extends straight in a longitudinal direction (18),
so that at least one wheel of a steerable axle is arranged at a first position (19) in the longitudinal direction (18) on a first segment (12, 12') which can be pivoted around a pivot axis, and
so that the carriages are aligned in the longitudinal direction (18) in a straight-ahead position, aligning the first pivotable segment (12, 12') in a straight-ahead position (17) parallel to the longitudinal direction (18), and
at least
marking a current measurement value of the steering angle sensor of the steerable axle as a straight-ahead position in a controller (15) of the road vehicle, or
marking a current measurement value of the bending angle sensor as a zero position in a controller (15) of the road vehicle.

15. The method according to claim 14, wherein the method additionally comprises the steps of
pivoting the wheel with the first segment (12, 12') in a first steering direction into a turned position of the steerable axle,
measuring the actual pivot angle of the first segment (12, 12') relative to the straight-ahead position (17), and
assigning the actual pivot angle to a current measurement signal of the steering angle sensor of the steerable axle in the controller (15) of the vehicle.

16. The method according to either of claims 14 or 15, wherein the method additionally comprises the steps of
locking the first segment (12, 12') in the straight-ahead position (17) before the vehicle is driven onto the first alignment aid,
releasing the locking of the first segment (12, 12') before pivoting the wheels, and
re-locking the first segment (12, 12') when the calibration is complete and the first segment (12, 12') is again in the straight-ahead position (17).

## Revendications

1. Dispositif d'étalonnage (1) permettant d'étalonner au moins un capteur d'angle d'articulation ou un capteur d'angle de direction d'un véhicule routier en plusieurs parties
comportant un premier moyen auxiliaire d'alignement (2),
dans lequel le premier moyen auxiliaire d'alignement (2) s'étend en ligne droite dans une direction longitudinale (18), et
dans lequel le premier moyen auxiliaire d'alignement (2) est conçu de telle sorte que les roues d'au moins un essieu d'un premier wagon du véhicule routier en plusieurs parties et les roues d'un essieu d'un second wagon du véhicule routier en plusieurs parties peuvent lui passer dessus, de telle sorte que le premier et le second wagon sont ainsi alignés dans une position en ligne droite,
comportant au moins un premier segment (12, 12`) pouvant pivoter,
dans lequel le premier segment (12, 12') pouvant pivoter est disposé à une première position (19) dans la direction longitudinale du premier moyen auxiliaire d'alignement (2) et dans lequel le premier segment (12, 12') peut être pivoté d'une position en ligne droite (17) à une position braquée, de sorte qu'une roue pouvant être dirigée d'un essieu du véhicule routier en plusieurs parties peut être pivotée avec le premier segment (12, 12').

2. Dispositif d'étalonnage (1) selon la revendication précédente, dans lequel le dispositif d'étalonnage (1) présente un second moyen auxiliaire d'alignement (3), dans lequel le premier moyen auxiliaire d'alignement (2) et le second moyen auxiliaire d'alignement (3) s'étendent en ligne droite et parallèlement l'un à l'autre dans la direction longitudinale (18), et dans lequel le premier moyen auxiliaire d'alignement (2) et le second moyen auxiliaire d'alignement (3) sont disposés à une distance de voie (S) l'un par rapport à l'autre.

3. Dispositif d'étalonnage (1) selon l'une des revendications précédentes, dans lequel au moins le premier ou le second moyen auxiliaire d'alignement (2, 3) est choisi parmi une ligne peinte ou projetée sur une surface praticable, une nervure faisant saillie par rapport à une surface, une cavité creusée dans une surface et une file de rails ou une combinaison de celles-ci.

4. Dispositif d'étalonnage (1) selon l'une des revendications précédentes, dans lequel le dispositif d'étalonnage (1) présente une paire (6, 7, 8, 9, 10, 11) constituée du premier segment (12, 12') pouvant pivoter et d'un second segment (13) pouvant pivoter,
dans lequel le second segment (13) pouvant pivoter est disposé à la première position (19) dans la direction longitudinale (18), et
dans lequel le second segment (13) pouvant pivoter peut être pivoté d'une position en ligne droite (17) à une position braquée, de sorte que les roues pouvant être dirigées de l'essieu du véhicule routier peuvent être pivotées avec les premier et second segments (12, 12', 13).

5. Dispositif d'étalonnage (1) selon l'une des revendications précédentes, dans lequel le dispositif d'étalonnage (1) présente un appareil de mesure d'angle permettant de détecter un angle de pivotement (α) d'au moins le premier ou le second segment (12, 12', 13) pouvant pivoter par rapport à la position en ligne droite (17).

6. Dispositif d'étalonnage (1) selon l'une des revendications précédentes, dans lequel le dispositif d'étalonnage (1) présente au moins un premier segment (12, 12`) pouvant pivoter supplémentaire, de préférence une paire (6, 7, 8, 9, 10, 11) supplémentaire de premier et second segments (12, 12', 13) pouvant pivoter, à une seconde position (20) dans la direction longitudinale (18).

7. Dispositif d'étalonnage (1) selon l'une des revendications précédentes lorsqu'elle dépend de la revendication 5, dans lequel le dispositif d'étalonnage (1) présente une commande (15), dans lequel la commande (15) est connectée de manière efficace à l'appareil de mesure d'angle de sorte que, lors du fonctionnement du dispositif d'étalonnage (1), la commande (15) reçoit un signal de mesure en provenance de l'appareil de mesure d'angle, et dans lequel la commande (15) présente une interface (16) qui peut être connectée à une interface (16) du véhicule routier et dans lequel la commande (15) est configurée de telle sorte que, lors du fonctionnement du dispositif d'étalonnage (1), la commande (15) émet, par l'intermédiaire de l'interface (16), un signal d'étalonnage pour au moins le capteur d'angle d'articulation ou le capteur d'angle de direction du véhicule routier.

8. Dispositif d'étalonnage (1) selon l'une des revendications précédentes, dans lequel au moins le premier ou le second moyen auxiliaire d'alignement est une file de rails (2, 3) et dans lequel au moins la première ou la seconde file de rails (2, 3) est un profilé en forme de L ou un profilé en forme de U comportant une surface de roulement (4) pour une surface d'appui de pneumatique d'un pneumatique d'une roue du véhicule routier et au moins une surface de guidage permettant de guider une paroi latérale du pneumatique.

9. Dispositif d'étalonnage (1) selon l'une des revendications précédentes, dans lequel au moins le premier ou le second segment (12, 12', 13) peut être bloqué dans la position en ligne droite (17).

10. Dispositif d'étalonnage (1) selon l'une des revendications précédentes, dans lequel une distance dans la direction longitudinale (18) entre deux premiers segments (12, 12`) pouvant pivoter peut être modifiée de manière à pouvoir être réglée.

11. Système comportant un dispositif d'étalonnage (1) selon l'une des revendications précédentes et un véhicule routier en plusieurs parties,
dans lequel le véhicule routier en plusieurs parties présente une pluralité de wagons reliés de manière mobile entre eux et une pluralité d'essieux comportant des roues comportant des pneumatiques.

12. Système selon la revendication précédente, dans lequel le véhicule routier en plusieurs parties présente une pluralité d'essieux dirigés, dans lequel la pluralité d'essieux dirigés sont de préférence disposés sur au moins un premier et un second wagon.

13. Utilisation d'un dispositif d'étalonnage (1) selon l'une des revendications 1 à 10 ou d'un système selon l'une des revendications 11 ou 12 pour l'étalonnage d'au moins un capteur d'angle d'articulation ou d'un capteur d'angle de direction d'un véhicule routier en plusieurs parties.

14. Procédé permettant d'étalonner au moins un capteur d'angle d'articulation ou un capteur d'angle de direction d'un véhicule routier en plusieurs parties comportant une pluralité de wagons reliés de manière mobile entre eux, comportant les étapes consistant à
faire passer une pluralité de roues du véhicule routier réparties sur la pluralité de wagons sur un premier moyen auxiliaire d'alignement (2),
dans lequel le premier moyen auxiliaire d'alignement (2) s'étend en ligne droite dans une direction longitudinale (18),
de sorte qu'au moins une roue d'un essieu pouvant être dirigé est disposée à une première position (19) dans la direction longitudinale (18) sur un premier segment (12, 12') pouvant pivoter autour d'un axe de pivotement et
de sorte que les wagons sont alignés le long de la direction longitudinale (18) dans une position en ligne droite,
aligner le premier segment (12, 12') pouvant pivoter dans une position en ligne droite (17) parallèle à la direction longitudinale (18) et
au moins
marquer une valeur de mesure actuelle du capteur d'angle de direction de l'essieu pouvant être dirigé comme position en ligne droite dans une commande (15) du véhicule routier ou
marquer une valeur de mesure actuelle du capteur d'angle d'articulation comme position zéro dans une commande (15) du véhicule routier.

15. Procédé selon la revendication 14, dans lequel le procédé présente en outre les étapes consistant à
faire pivoter la roue avec le premier segment (12, 12`) dans une première direction de direction vers une position braquée de l'essieu pouvant être dirigé,
mesurer l'angle de pivotement réel du premier segment (12, 12`) par rapport à la position en ligne droite (17) et
attribuer l'angle de pivotement réel à un signal de mesure actuel du capteur d'angle de direction de l'essieu pouvant être dirigé dans la commande (15) du véhicule.

16. Procédé selon l'une des revendications 14 ou 15, dans lequel le procédé présente en outre les étapes consistant à
bloquer le premier segment (12, 12`) dans la position en ligne droite (17) avant le passage du véhicule sur le premier moyen auxiliaire d'alignement,
libérer le blocage du premier segment (12, 12`) avant le pivotement des roues et
bloquer de nouveau le premier segment (12, 12`) lorsque l'étalonnage est terminé et que le premier segment (12, 12') est de nouveau dans la position en ligne droite (17).
